**Europäisches Patentamt**

**European Patent Office**

**Office européen des brevets**

(19)

(11) Veröffentlichungsnummer : **0 399 208 B1**

(12)

# EUROPÄISCHE PATENTSCHRIFT

(45) Veröffentlichungstag der Patentschrift :
**23.12.92 Patentblatt 92/52**

(51) Int. Cl.$^5$ : **C01B 17/22**

(21) Anmeldenummer : **90107314.8**

(22) Anmeldetag : **18.04.90**

(54) **Verfahren zur Herstellung von Natriummonosulfid.**

(30) Priorität : **22.04.89 DE 3913258**

(43) Veröffentlichungstag der Anmeldung :
**28.11.90 Patentblatt 90/48**

(45) Bekanntmachung des Hinweises auf die
Patenterteilung :
**23.12.92 Patentblatt 92/52**

(84) Benannte Vertragsstaaten :
**BE DE ES FR GB IT**

(56) Entgegenhaltungen :
**EP-A- 0 177 671**
**DE-C- 590 278**
**GB-A- 2 175 292**
**CHEMICAL ABSTRACTS, vol. 102, no. 16, April
1985 Columbus, Ohio, USA V.F. Zinchenko et
al.: "Sodium polysulfide." Seite 135;ref. no.
134386 P and SU-A-1129186**
**Synth. React. Inorg. Met.-Org. Chem. vol. 14,
no. 7, 1984, Seiten 945 - 951; A.P. Brown et al.:
"The direct synthesis ofsodium polysulfides
from sodium and sulfur."**

(73) Patentinhaber : **Degussa Aktiengesellschaft
Weissfrauenstrasse 9
W-6000 Frankfurt am Main 1 (DE)**

(72) Erfinder : **Bittner, Friedrich, Dr.
Mozartstrasse 38
W-6232 Bad Soden (DE)**
Erfinder : **Hinrichs, Walter, Dr.
Alte Bohle 15
W-5040 Brühl (DE)**
Erfinder : **Hippe, Lutz, Dr.
Waldenser Strasse 3
W-6105 Ober-Ramstadt (DE)**
Erfinder : **Lange, Ludwig, Dr.
Mühlenbach 40
W-5040 Brühl (DE)**
Erfinder : **Splett, Erich
Im Bechholz 4
W-5030 Hürth-Berrenrath (DE)**

**Beschreibung**

Die Erfindung betrifft ein Verfahren zur Herstellung von Natriummonosulfid durch Umsetzung eines Natriumpolysulfids mit Natrium unter Schutzgas.

Natriummonosulfid $Na_2S$ ist ein wichtiges Reagenz zur Einführung von Schwefel in organische Moleküle. Es sind mehrere Verfahren bekannt, nach denen diese Verbindung hergestellt werden kann. Sie ist z. B. erhältlich durch Umsetzung von Natriumsalzen mit Schwefelwasserstoff in wäßrigen oder alkoholischen Lösungen oder durch Reduktion von Natriumsulfat und Kohlenstoff oder Wasserstoff. Den bekannten Verfahren ist gemeinsam, daß stets mit Reaktionspartnern verunreinigte Produkte anfallen, die durch Lösen in geeigneten Lösungsmitteln und Filtrieren von den Verunreinigungen getrennt werden müssen.

Da die Elemente Natrium und Schwefel äußerst heftig miteinander reagieren
(Bildungsenthalpie für $Na_2S$: $\Delta H_B = -389,1$ kJ/Mol)
konnte bislang eine Herstellung direkt auf den auf dem Markt in großer Reinheit erhältlichen Elementen nicht zum technischen Einsatz gelangen.

Wasserfreies $Na_2S$ in ausreichend reiner Form war nur durch Entwässern des Hydrats $Na_2S \cdot 9H_2O$ unter Wasserstoffatmosphäre zugänglich, wobei dieses Hydrat durch Umsetzung von Natriumhydrogensulfid mit NaOH in einem polaren Lösungsmittel hergestellt werden mußte (Kirk-Othmer, 3. Aufl. (1982) Vol. 18, Seiten 793 - 847, insbesondere Seiten 803 und 809).

In der DE-A-34 36 698 ist ein Verfahren zur Herstellung von Natriumpolysulfiden aus den Elementen Natrium und Schwefel angegeben, bei dem man das Natrium und den Schwefel unter Schutzgas in einem dem gewünschten Polysulfid entsprechenden stöchiometrischen Verhältnis abwechselnd in eine vorgelegte Schmelze eines Polysulfids unter kräftigem Rühren in derart bemessenen Portionen eindosiert, daß beim Natriumeintrag die Reaktionsmischung im Zustand einer rührfähigen Suspension verbleibt und daß man beim Eintrag des Schwefels diesen jeweils vollständig zu einem Polysulfid eines höheren Schwefelgehaltes abreagieren läßt.

In der deutschen Patentanmeldung DE-A-38 31 737 veröffentlicht am 22.03.1990 ; enstpricht der EP-A-0361220) ist ein Verfahren zur Herstellung von niederen Natriumpolysulfiden aus höheren Natriumpolysulfiden und Natrium beschrieben, bei dem man das höhere Natriumpolysulfid unter Schutzgas in schmelzflüssiger Form vorlegt und das Natrium in einem dem gewünschten Polysulfidprodukt entsprechenden stöchiometrischen Verhältnis unter kräftigem Rühren der Schmelze in derartigen Mengen zudosiert, daß die Reaktionsmischung im Zustand einer rührfähigen Suspension verbleibt und das Rühren bis zur vollzogenen Bildung des Produkts fortsetzt.

Grundsätzlich wäre es nach diesen beiden Verfahren auch möglich, Natriummonosulfid zu gewinnen, indem man für den gebundenen Schwefel und das Natrium das erforderliche stöchiometrische Verhältnis vorsieht. Da die genannten Verfahren jedoch eine Schmelze als Reaktionsmedium voraussetzen, die zumindest im Endstadium der Umsetzung aus $Na_2S$ allein besteht, würde infolge des sehr hohen Schmelzpunkts dieser Verbindung (1180 - 1200° C) und wegen der starken chemischen Aggressivität der Schmelze kaum ein wirtschaftlich erschwinglicher Reaktorwerkstoff zur Verfügung stehen.

Der Erfindung liegt daher die Aufgabe zugrunde, einen Herstellungsweg zu finden, mit dem sich aus einem Natriumpolysulfid, insbesondere einer der Verbindungen $Na_2S_5$, $Na_2S_4$, $Na_2S_3$, $Na_2S_2$, unter Verzicht auf ein in der Reaktion in schmelzflüssiger Form vorliegendes Reaktionsmedium und unter Anwendung relativ niedrig liegender Reaktionstemperaturen hochprozentiges Natriummonosulfid auf wirtschaftliche Weise herstellen läßt.

Diese Aufgabe wird erfindungsgemäß gelöst durch ein Verfahren zur Herstellung von Natriummonosulfid durch Umsetzung eines Natriumpolysulfids mit Natrium unter Schutzgas, bei dem man das Natriumpolysulfid in einer ersten Stufe in feinverteiltem festen Zustand vorlegt, es auf Temperaturen von 100 - 150° C vorheizt, der Vorlage unter intensivem Mischen, vorzugsweise unter Kneten und/oder Mahlen, schmelzflüssiges Natrium in der erforderlichen Menge nach und nach zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein $Na_2S$-Gehalt von mindestens 95 Gew.% erreicht ist.

Als Schutzgas wird Inertgas, bevorzugt Argon, eingesetzt.

Von Bedeutung ist auch hier die Wahl des richtigen Reaktorwerkstoffs. Gemäß einer vorteilhaften Ausführungsform der Erfindung führt man die Umsetzung in einem Raktor durch, dessen mit dem Raktionsgemisch in Berührung kommende Teile aus Aluminiumlegierungen, insbesondere AlMg3 oder AlMn oder Sinterkorund oder SiC oder aus Glaskohlenstoff bestehen oder mit diesen Werkstoffen ummantelt bzw. ausgekleidet sind.

Eine besonders wichtige Maßnahme in dem erfindungsgemäßen Verfahren ist die Anwendung solcher Mischeinrichtungen, mit denen das im Verlaufe der Umsetzung verschiedene Konsistenzstufen durchlaufende Reaktionsgemisch möglichst intensiv zerkleinert und durchmischt werden kann. Besonders brauchbar haben sich Einrichtungen mit Knet- und/oder Mahlwirkung erwiesen. Beispiele sind Trogkneter mit gegenläufigen Knetschaufeln oder Rührwerkskugelmühlen.

Bei Knetern sollten die Knetflächen stets von vorgelegtem Natriumpolysulfid (im Ausgangsstadium der Reaktion) bzw. vom gebildeten, dunkel bis grau gefärbten Vorprodukt (bei fortgeschrittener Umsetzung) überdeckt werden, um eine Korrosion durch das aggressive Reaktionsgemisch zu vermeiden.

Der Reaktorinhalt durchläuft bei Durchführung des Verfahrens verschiedene charakteristische Stadien von Konsistenz und Färbung:

Verwendet man als Ausgangsmaterial Natriumtetrasulfid $Na_2S_4$, so liegt dieses zu Beginn der 1. Verfahrensstufe als pulverförmiges, orange bis gelb gefärbtes Material vor.

Ca. 20° C über den Schmelzpunkt erhitztes Natrium wird in die Vorlage so eindosiert, daß eine Reaktortemperatur von 120 - 250° C. gegebenenfalls unter Außenkühlung, eingehalten werden kann.

Nach Eintrag von ca. 2 % des erforderlichen Natriums ist der pulverförmige Reaktorinhalt gelb gefärbt.

Nach Eintrag von ca. 6 % des erforderlichen Natriums ist die Färbung des vorliegenden Pulvers rötlich.

Nach Eintrag von ca. 30 - 35 % des erforderlichen Natriums ist die Färbung des vorliegenden Pulvers gelblichgrau.

Nach erfolgter Zugabe des restlichen Natriums liegt blauschwarz gefärbtes Pulver vor.

In der 2. Verfahrensstufe, dem unter fortgesetztem zerkleinernden Mischen erfolgenden Erhitzen auf 250 - 480° C bleibt die pulvrige Beschaffenheit des Reaktorinhalts erhalten und es erfolgt ein Farbübergang von blauschwarz nach weiß.

Das erfindungsgemäße Verfahren nimmt, im Unterschied von dem eingangs abgehandelten Verfahren zur Herstellung niederer Polysulfide, bewußt die Ansammlung von ungeschmolzener Festsubstanz im Reaktor in Kauf und bewältigt die Umsetzung des Natriumpolysulfids mit Natrium mit Ausbeuten bis zu 97 % der Theorie bei Temperaturen, die weit unter dem Schmelzpunkt des Endprodukts ($\sim$ 1200° C) liegen.

Aus dem erhaltenen hochprozentigen Natriummonosulfid läßt sich durch Zusammenschmelzen mit entsprechenden Mengen Schwefel natürlich auch jedes gewünschte Polysulfid erhalten.

Die Erfindung wird nachfolgend anhand von einem Ausführungsbeispiel weiter erläutert.

Beispiel

Eine Laborknetmaschine mit einem aus zwei Halbzylindern gebildeten Trog aus V4A mit polierten Innenwänden war mit zwei polierten Schaufeln aus V4A in Sigma-Form, die jeweils auf einer eigenen Antriebswelle montiert waren, ausgerüstet.

Der Trogunterteil besaß einen Doppelmantel zur Aufnahme eines Wärmeträgermediums. Der aufgeschraubte Deckel aus V4A war mit einem Stutzen, der mit einer Schraubkappe verschlossen werden konnte, und einem unmittelbar unter dem Deckel endenden Einleitungsrohr für das Schutzgas Argon versehen. Durch den Stutzen wurden sowohl Natrium und Schwefel eingefüllt, als auch das Vorprodukt entnommen.

Die Schaufeldrehzahl konnte variiert werden zwischen 40 - 60 Upm. Durch eine der vier Seitenwände war parallel zu den Wellen, auf denen die Schaufeln montiert waren, ein Temperaturfühlerschutzrohr aus V4A in den Trog bzw. Reaktionsraum eingeführt. Die lichte Länge des Troges betrug 100 mm, seine lichte Breite 117 mm und seine lichte Tiefe 110 mm. Das Nutzvolumen dieses Trogs war 750 ml. Dementsprechend konnte dieser Trog ca. 500 g Vorprodukt aufnehmen.

Vor Beginn der chargenweisen Produktion wurde der Trog aufgeheizt, wobei dessen Unterteil mit Wärmeträgeröl mit einer Temperatur von 160° C beaufschlagt wurde. Mit ca. 20 l Argon pro Stunde wurde der Trog gespült. Danach wurden 167,3 g Natriumtetrasulfid $Na_2S_4$ in Form von Pellets eingefüllt. Nach Zermahlen der Pellets wurde durch den mit einer Schraubkappe verschließbaren Stutzen schmelzflüssiges Natrium in kleinen Portionen dem $Na_2S_4$ zugesetzt. Am Anfang betrug die Natriummenge pro Portion ca. 1 g. Im Verlauf der Reaktion wurde sie auf 5 g pro Portion gesteigert. Die Dosierung des Natriums wurde so gesteuert, daß die Temperatur im Reaktionsraum nicht höher als 220° C stieg.

Während der portionsweisen Zugabe von insgesamt 132,7 g Natrium über einen Zeitraum von ca. 3,5 h blieb die Schaufeldrehzahl konstant bei 50 Upm. Das körnige bis pulverförmige Reaktionsgemisch nahm während der Na-Zugabe verschiedene Farbtöne von gelb, rot, grau bis dunkelschwarz bei Beendigung der Na-Dosierung an. Nach Abkühlen des erhaltenen Vorprodukts wurde eine Probe entnommen.

Die Analyse ergab:
58,6 Gew.% Gesamtnatrium (theoret. 59,0 %)
41,4 Gew.% Gesamtschwefel (theoret. 41,0 %)
Von dem Gesamtschwefel liegen in dem Vorprodukt 36,9 Gew.% Schwefel in Form des Sulfids vor. Die Sulfidbestimmung erfolgte jodometrisch. Der Gesamtschwefelgehalt wurde nach Oxidation des Schwefels mit $H_2O_2$ im alkalischen Medium zum Sulfat gravimetrisch als $BaSO_4$ bestimmt.

Der Gesamtnatriumgehalt wurde flammenphotometrisch ermittelt. Natrium, das nicht abreagiert war, wurde gasvolumetrisch erfaßt. Hierbei wurde ein Anteil von 4,5 Gew.% gefunden. Das Vorprodukt, das mehr als 90 Gew.% Natriummonosulfid enthielt, wurde zur Nachreaktion der noch nicht zum Sulfid reagierten Bestandteile Natrium und Schwefel in einen Laborreaktor eingebracht, der bis ca. 400° C hochgeheizt werden konnte.

Der zylindrische Laborreaktor aus der Aluminiumlegierung AlMg3 mit ebener Bodenplatte hatte einen aufgeflanschten Deckel ebenfalls aus AlMg3 mit einem durch Schraubkappe verschließbaren Stutzen, einem unter dem Deckel endenden Einleitungsrohr für das Schutzgas Argon, einem Temperaturfühlerschutzrohr und einer Stopfbuchse im Deckel zur Durchführung der mit AlMg3 umkleideten vertikal stehenden Flügelrührerwelle, auf der die Rührblätter aus AlMg3 befestigt waren. Der Reaktor hatte eine lichte Höhe von 150 mm und eine lichte Weite von ebenfalls 150 mm.

Um eine optimale Rührwirkung im Laborreaktor zu erreichen, mußte die Menge von 300 g Reaktionsmischung verdoppelt werden. Daher wurde die gleiche Menge in der eben beschriebenen Art und Weise in der Laborknetmaschine noch einmal hergestellt.

Nach Einfüllen von 600 g des schwarzen pulverförmigen Vorprodukts aus den 2 Ansätzen wurde der am Mantel mit einer Wärmedämmung versehene Reaktor auf eine stufenlos heizbare elektrische Platte gesetzt und im Verlauf von 1,5 h gleichmäßig auf 370° C hochgeheizt. Während des Aufheizens wurde das Vorprodukt intensiv gerührt. Die Drehzahl des Rührers wurde auf 100 Upm eingestellt. Hierzu war ein starker Rührmotor erforderlich, da das Vorprodukt ab 300° C zum Verklumpen neigt. Mit einem Inertgasstrom von 30 l pro Stunde wurde der Reaktor während des Aufheizens bzw. der Nachreaktion gespült.

Nach dem Abkühlen wurde das nunmehr weiße Endprodukt dem Reaktor entnommen und gesiebt. Die Maschenweite des Siebes betrug 0,355 mm. Etwa 70 % des durchgesiebten Reaktionsprodukts wurde so als homogenes, weißes Pulver gewonnen.

Die Analyse ergab folgende Zusammensetzung:

59,0 Gew.% Na (theoret. 58,97 Gew.%)

41,0 Gew.% S (theoret. 41,03 Gew.%)

Die grobkörnige Fraktion (Siebrückstand) hatte die Zusammensetzung $Na_2S$; hinsichtlich des Schwefelgehalts der einzelnen Körner war sie jedoch inhomogen, d. h. die Körner enthielten teilweise geringe Mengen an Polysulfid (ca. 1 - 5 Gew.%).

Aus dem eben Beschriebenen ergibt sich folgende Mengenbilanz:

```
Vorlage im Kneter (insgesamt):      334,6 g Na₂S₄

Natriumzugabe insgesamt:            265,4 g Natrium

Produktion an Vorprodukt:           600 g

Vorlage im Laborreaktor:            600 g Vorprodukt

Entnahme aus Laborreaktor:          600 g Endprodukt


Siebfraktion < 0,355 mm:            420 g Na₂S;


Rest an inhomogener Kornfraktion > 0,355 mm: 180 g
```

Die inhomogene Kornfraktion > 0,355 mm aus dem Verfahren zur Herstellung von $Na_2S$ wurde gesammelt und dem Kneter für die erste Umsetzungsstufe zugeführt. Nach einer Stunde Mahlen bei 50 Upm unter Argonatmosphäre wurde ein feinteiliges Pulver erhalten, das als Vorlage im Kneter für einen neuen Ansatz verwendbar ist.

**Patentansprüche**

1. Verfahren zur Herstellung von Natriummonosulfid durch Umsetzung eines Natriumpolysulfids mit Natrium unter Schutzgas,
   **dadurch gekennzeichnet,**

daß man das Natriumpolysulfid in einer ersten Stufe in feinverteiltem festen Zustand vorlegt, es auf Temperaturen von 100 - 150° C vorheizt, der Vorlage unter intensivem Mischen, vorzugsweise unter Kneten und/oder Mahlen, schmelzflüssiges Natrium in der erforderlichen Menge nach und nach zusetzt, wobei die Temperatur des Reaktionsgemisches auf 120 - 250, vorzugsweise 140 - 200° C gehalten wird und in einer zweiten Stufe das gebildete, blauschwarz gefärbte Vorprodukt unter Fortsetzen des Mischens solange bei 250 - 480, vorzugsweise 350 - 400° C nachreagieren läßt, bis unter Hellfärbung ein Na$_2$S-Gehalt von mindestens 95 Gew.% erreicht ist.

## Claims

1. A process for the preparation of sodium monosulphide by the reaction of a sodium polysulphide with sodium under protective gas, characterised in that in a first stage, the sodium polysulphide is introduced into the reaction vessel in a finely divided solid state and preheated to temperatures of from 100 - 150°C and molten sodium is gradually added in the required quantity with intensive mixing, preferably with kneading and/or grinding, while the temperature of the reaction mixture is maintained at 120 - 250°C, preferably at 140 - 200°C, and in a second stage the bluish black preliminary product formed is left to react at 250 - 480°C, preferably at 350 - 400°C, while mixing is continued, until the colour becomes pale and an Na$_2$S content of at least 95% by weight is obtained.

## Revendications

1. Procédé de production du monosulfure de sodium par mise en réaction d'un polysulfure de sodium avec du sodium sous gaz protecteur,
   caractérisé en ce que l'on introduit dans une première étape le polysulfure de sodium à l'état solide finement divisé, que l'on chauffe au préalable à des températures de 100 à 150°C, que l'on ajoute au produit d'introduction sous mélange intensif, de préférence sous malaxage et/ou broyage, peu à peu le sodium liquide de fusion en quantité requise, procédé dans lequel la température du mélange réactionnel est maintenue à 140 - 200°C, et dans une deuxième étape on fait réagir finalement le produit précurseur formé, coloré en bleu-noir en poursuivant le mélange à 250 - 400°C, de préférence à 350 - 400°C, jusqu'à ce qu'une teneur en Na$_2$S d'au moins 95 % en poids soit atteinte tout en ayant une coloration claire.